# EUROPÄISCHE PATENTANMELDUNG

(11) **EP 4 239 225 A1**
(43) Veröffentlichungstag der Anmeldung: **06.09.2023**
(21) Anmeldenummer: 22159714.9
(22) Anmeldetag: 02.03.2022
(51) Int. Cl.: F16H 57/08

(54) **PLANETENGETRIEBEANORDNUNG MIT IM/AM PLANETENTRÄGER GELAGERTER SONNENWELLE, ENTSPRECHENDES INDUSTRIEGETRIEBE SOWIE VERFAHREN UND VERWENDUNG**

(71) Anmelder: Flender GmbH, 46395 Bocholt (DE)
(72) Erfinder: BRUNS, Christoph, 46395 Bocholt (DE); KLEIN-HITPASS, Michael, 46395 Bocholt (DE); TEGELKAMP, Michael, 46395 Bocholt (DE); SCHLEGEL, Eugen, 46395 Bocholt (DE)
(74) Vertreter: Michalski Hüttermann & Partner Patentanwälte mbB

(57) **Zusammenfassung**

Die vorliegende Erfindung liefert eine Planetengetriebeanordnung (10) insbesondere für Industriegetriebe, mit einer Sonnenwelle (13) und einem Planetenträger (17) und damit in einer Planetenradaufnahme (6) geführten Planeten (9), in welche die Sonnenwelle (13) eingreift, wobei die Sonnenwelle (13) im/am Planetenträger (17) gelagert ist. Dadurch wird nicht nur eine vorteilhafte Konstruktion bzw. Bauform ermöglicht, sondern auch eine vorteilhafte Art der Lagerung. Die vorliegende Erfindung betrifft auch entsprechende Verfahren und Verwendungen.

## Beschreibung

### TECHNISCHES GEBIET

Die Erfindung betrifft eine Planetengetriebeanordnung insbesondere für Industriegetriebe, mit einer Sonnenwelle und einem Planetenträger und damit in einer Planetenradaufnahme geführten Planeten, in welche die Sonnenwelle eingreift, sowie ein damit ausgestattetes (Industrie-)Getriebe und entsprechende Verwendungen der hier beschriebenen Planetengetriebeanordnung bzw. Lagerungsart (Ausgestaltung der Lagerung) beispielsweise auch für Triebstränge mit vergleichsweise hohen Drehmomenten und starken dynamischen Belastungen, beispielsweise auch für Windenergieanlagen oder Bergbauanlagen oder Mühlentriebe.

### HINTERGRUND DER ERFINDUNG

In Planetengetrieben insbesondere für Industriegetriebe wird eine Welle bzw. eine daran gekuppelte Sonne in Eingriff mit in einem Planetenträger und in einer Planetenradaufnahme geführten Planeten gelagert, wobei die Welle im Getriebegehäuse gelagert ist, insbesondere an zwei axial beabstandeten Lagerpunkten.

Es besteht ein ständiges Bedürfnis an ingeniösen Verbesserungen des konstruktiven Aufbaus und der Ausgestaltung solcher Planetengetriebe stufen insbesondere für Industriegetriebe. Dabei sollen insbesondere auch hohe Anforderungen hinsichtlich Getriebeeffizienz, Baugröße, Materialeinsatz und/oder Fertigungsaufwand erfüllt werden können.

### ZUSAMMENFASSUNG DER ERFINDUNG

Es ist die Aufgabe der vorliegenden Erfindung, Maßnahmen aufzuzeigen, die eine Optimierung der Ausgestaltung von Planetengetrieben bzw. Planetengetriebestufen insbesondere hinsichtlich Getriebeeffizienz, Baugröße, Materialeinsatz und/oder Fertigungsaufwand bei vergleichsweise voluminösen bzw. materialintensiven Industriegetrieben ermöglichen. Insbesondere besteht die Aufgabe darin, eine hohe Getriebeleistungsdichte bei möglichst minimiertem Materialeinsatz durch möglichst einfache konstruktive Maßnahmen sicherzustellen, insbesondere auch für Anwendungen mit vergleichsweise hohen Drehmomenten und hohen dynamischen Belastungen im Triebstrang.

Die Lösung der Aufgabe erfolgt durch eine Planetengetriebeanordnung mit den Merkmalen des Anspruchs 1, durch ein (Industrie-)Getriebe mit den Merkmalen des nebengeordneten Vorrichtungsanspruchs und durch ein Verfahren und Verwendungen mit den Merkmalen des jeweiligen nebengeordneten Verfahrens-/Verwendungsanspruchs. Bevorzugte Ausgestaltungen sind in den Unteransprüchen und in der nachfolgenden Beschreibung angegeben, die jeweils einzeln oder in Kombination miteinander einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine vorteilhafte Lagerungsart der Welle bzw. Sonnenwelle. Bereitgestellt wird insofern eine Planetengetriebeanordnung insbesondere für Industriegetriebe, mit einer Sonnenwelle und einem Planetenträger und damit in einer Planetenradaufnahme (insbesondere Hohlrad mit Innenverzahnung) geführten Planeten, in welche die Sonnenwelle eingreift, wobei die Sonnenwelle am/im Planetenträger gelagert ist. Dies liefert zahlreiche Vorteile in Kombination miteinander, basierend auf einer vergleichsweise leicht implementierbaren Maßnahme. Erfindungsgemäß wird demnach vorgeschlagen, die Lagerung der (Sonnen-)Welle möglichst komplett unabhängig vom Getriebegehäuse zu realisieren, insbesondere bei einstückiger Ausgestaltung von Welle und Sonne.

Die Erfindung schlägt demnach eine neue Art der Lagerung der Sonnenwelle vor, nämlich möglichst ausschließlich im/am Planetenträger. Die Erfindung basiert dabei auch auf den folgenden konzeptuellen Ansätzen: Verminderung von Lagerverlusten dank Verzicht auf Relativbewegung gegenüber dem Gehäuse, durch Lagerung der Sonnenwelle im/am Planetenträger, insbesondere auch dank verringerte Drehzahldifferenz zwischen den gelagerten Komponenten (gleichsinnige Rotationsrichtung von Sonnenwelle und Planetenträger); höhere Getriebe-Leistungsdichte insbesondere dank Einsparung von Bauraum und Material; kleinerer Bauraum und damit einhergehende Materialeinsparungen; verringerte Lagerverlustleistung und erhöhte Lagerlebensdauer; Einsparung an Material insbesondere auch dank platzsparender Lagerung der Sonnenwelle im/am Planetenträger anstelle an einer weiter entfernten Stelle im Gehäuse.

Die erfindungsgemäßen Vorteile ermöglichen dabei auch eine spürbare Effizienzsteigerung im jeweiligen Getriebe, insbesondere dank Minimierung der Verlustleistung, Steigerung der Lagerlebensdauer, sowie Reduzierung der Baulänge, des Materialeinsatzes und des Fertigungsaufwandes. Insofern liefert die vorliegende Erfindung für ganz unterschiedliche Arten von Triebsträngen unterschiedliche Vorteile, die in Kombination miteinander zu einer sehr vorteilhaften Ausgestaltung des jeweiligen Getriebes bzw. der jeweiligen Getriebestufe führen.

Personifizierte Begriffe, soweit sie hier nicht im Neutrum formuliert sind, können im Rahmen der vorliegenden Offenbarung alle Geschlechter betreffen. Etwaige hier verwendete englischsprachige Ausdrücke oder Abkürzungen sind jeweils branchenübliche Fachausdrücke und sind dem Fachmann in englischer Sprache geläufig. Etwaige dazu synonym verwendete/verwendbare deutschsprachige Begriffe können hier der Vollständigkeit halber in (Klammern) angegeben werden, oder vice versa.

Sofern gemäß der vorliegenden Offenbarung auf Planeten Bezug genommen wird, ist dieser Begriff im Sinne eines Planetenrads oder mehrerer Planetenräder als Getriebekomponente zu verstehen.

Bei bisherigen Getrieben erfolgte eine Lagerung der (Sonnen-)Welle üblicherweise am Getriebegehäuse; bei bisherigen bekannten konstruktiven Lösungen waren insbesondere eine größere Baulänge (und damit einhergehend größerer Materialaufwand), geringere Lagerlebensdauer, sowie eine höhere Verlustleistung in Kauf zu nehmen. Das Getriebe bestand dabei im Vergleich zur erfindungsgemäßen Lösung auch aus mehr Komponenten, deren jeweilige Herstellung mit einem größeren Fertigungsaufwand verbunden ist/war. Bisher wurde die (Sonnen-)Welle gemäß dem Stand der Technik im Getriebegehäuse gelagert, wodurch die Drehzahl der Sonne direkt die Lagerverlustleistung und die Lagerlebensdauer beeinflusst. Im Vergleich zur erfindungsgemäßen Lösung ist die Verlustleitung höher und die Lagerlebensdauer niedriger. Getriebe nach bisherigem Stand der Technik sind/waren demnach in der Regel größer und schwerer, und die entsprechenden Konstruktionen erfordern mehr Materialaufwand beispielsweise auch zur Abstützung, insbesondere da die Lagerung erst hinter dem Planetenträger beginnt.

Hingegen gemäß der Erfindung wird die Erkenntnis genutzt, dass die (Sonnen-)Welle direkt schon in einem Axialabschnitt des Planetenträgers gelagert und abgestützt werden kann, also axial vergleichsweise nah an der Eingriffsstelle/Verzahnung von Sonne und Planeten. Dies hat sich nicht zuletzt auch hinsichtlich der Biegebeanspruchung auf die Welle als vorteilhaft erwiesen. Dabei kann z.B. auch eine Verkürzung der Einbaulänge des gesamten Getriebes um 20-30% realisiert werden.

Ist im Gegensatz dazu gemäß dem Stand der Technik die (Sonnen-)Welle im Getriebegehäuse gelagert, so ist deren Verzahnung stärker belastet, insbesondere da sich durch Toleranzen oder dergleichen fertigungstechnisch begründete Abweichungen z.B. eine nachteilige Taumelbewegung des Planetenträgers einstellen könnte. Diese erzeugt Zusatzkräfte, welche die Verzahnung und die Lagerung der (Sonnen-)Welle zusätzlich belasten.

Basierend auf der vorliegenden Erfindung kann die Sonne einschließlich der Lagerung im Planetenträger angeordnet werden; dadurch kann auch eine nachteilige Taumelbewegung kompensiert bzw. ausgeglichen werden, so dass nachteilige Zusatzkräfte oder übermäßiger Verschleiß der Verzahnung vermieden werden können. Dies wirkt sich auch spürbar positiv auf die Verzahnungsund Lagerlebensdauer aus.

Die Planetengetriebeanordnung kann ein komplettes Getriebe oder auch nur eine Getriebestufe umfassen. Sofern gemäß der vorliegenden Offenbarung bezüglich der Ausrichtung des (Industrie)Getriebes und/oder (Sonnen-)Welle auf eine axiale Richtung abgestellt wird, so kann diese axiale Richtung je nach Ausrichtung/Einbausituation des Getriebes z.B. die vertikale oder horizontale Richtung betreffen. Jedenfalls bezieht sich die axiale Richtung auf die Mittellinien bzw. Mittenlängsachse bzw. auf die Drehachse(n) der jeweiligen Getriebekomponente.

Beispielsweise weist eine erfindungsgemäße Planetengetriebeanordnung drei oder vier Planeten auf. Beispielsweise bestehen die Planeten und die Sonnenwelle aus Einsatzstahl. Beispielsweise bestehen Hohlräder aus Gusseisen oder aus Vergütungsstahl.

Es hat sich gezeigt, dass die erfindungsgemäße Art der Lagerung allgemein für Planetengetriebe bzw. Getriebeanordnungen mit Planetenstufen genutzt werden kann, wobei die hier beschriebenen Vorteile besonders spürbar werden, wenn die Drehrichtung identisch ist. Insofern ist die Erfindung nicht auf nur gewisse Anwendungen oder Leistungsklassen beschränkt; beispielsweise kann eine Implementierung im Windenergieanlagen-Sektor oder bei Bergbauanlagen (Minen- und Bergbauanwendungen im Allgemeinen) oder für einen Mühlenantrieb erfolgen.

Ausgangsseitig kann als Drehmomentstütze beispielsweise ein Abtriebsflansch vorgesehen sein, welcher mit einer Maschinenplattform verschraubt sein kann; die Abtriebspartie des Getriebes kann z.B. als Flanschwelle mit Zentrierung ausgeführt sein, wodurch eine Kupplung eingespart werden kann.

Die hier beschriebenen Vorteile hinsichtlich verringerter Lagerverlustleistung ergeben sich insbesondere auch deshalb, da der Planetenträger gleichsinnig mit der Welle mitdrehen kann und daher die Anzahl der Umdrehungen bzw. die Relativgeschwindigkeit in den Lagern vergleichsweise niedrig ist.

Gemäß einem Ausführungsbeispiel weist der Planetenträger wenigstens eine Lagerkomponente zur Lagerung der Sonnenwelle auf, insbesondere motorseitig oder axial außenliegend im Randbereich des Planetenträgers. Beispielsweise schließt der Planetenträger axial mit diesem Lagerabschnitt ab. Bevorzugt weist der Planetenträger einen kragen- oder zylinderartigen Abschnitt mit einer Innenmantelfläche zur Anordnung der Lagerkomponente auf (beispielsweise auch in der Art einer Bohrung oder Ausfräsung), wobei dieser Abschnitt bevorzugt auch mehrere Lagerringe aufweisen kann, z.B. zur Realisierung z.B. einer angestellten O-Lagerung (Stützlagerung). Eine vorteilhafte Ausgestaltung besteht auch darin, den Kragen in demselben Axialabschnitt sowohl auf der Innenseite als auch auf der Außenseite mit einer Lagerfläche zur Aufnahme wenigstens einer Lagerkomponente auszustatten. Dies begünstigt auch eine direkte radiale Kraftweiterleitung bei minimierten Momenten.

Gemäß einem Ausführungsbeispiel weist die Sonnenwelle wenigstens eine Lagerkomponente zur Lagerung im/am Planetenträger auf, insbesondere axial zwischen einem Verzahnungsabschnitt und einem Verbindungsabschnitt (insbesondere Kupplungszapfen mit Passfederverbindung, oder drehfeste Anbindung Motorwelle). Dies ermöglicht nicht zuletzt auch eine Lagerung bei minimaler (Biege)Belastung und reduziert das Risiko statischer Überbestimmtheit oder dergleichen innerer Materialspannungen. Es hat sich gezeigt, dass bei motorseitiger/motornaher Anordnung des Lagers im/am Planetenträger die hier beschriebenen Vorteile besonders spürbar werden, insbesondere besonders geringere Abstände, wenig/geringe Bauraumanforderungen und Materialeinsparungen.

Gemäß einem Ausführungsbeispiel ist die Planetengetriebeanordnung in einem Planetengetriebegehäuse angeordnet oder anordenbar, wobei die Sonnenwelle unabhängig vom Planetengetriebegehäuse gelagert ist, insbesondere ausschließlich im/am Planetenträger. Dies begünstigt auch eine mittelbare Abstützung am Gehäuse über den Planetenträger, insbesondere derart, dass Sonnenwelle und Planetenträger beide zusammen in demselben Axialabschnitt in radialer Richtung am Gehäuse abstützbar sind.

Gemäß einem Ausführungsbeispiel erstreckt sich die Sonnenwelle zumindest über einen (axialen) Abschnitt von einer/der Gehäusedurchführung (und entsprechender Abdichtung) über eine (bevorzugt einzige) Lagerstelle im/am Planetenträger bis in den Verzahnungsabschnitt der Planeten, insbesondere bei einstückiger integraler Ausgestaltung der Sonnenwelle. Dies begünstigt nicht zuletzt auch den hier beschriebenen kompakten und schlanken Aufbau. An der einen (bevorzugt einzigen) Lagerstelle ist bevorzugt eine O-Lagerung vorgesehen, also zwei Lagerringe mit winkelig angestellten Rollenlagern (insbesondere Stützlagerung mit angestellten Kegelrollenlagern in O-förmiger Anordnung).

Gemäß einem Ausführungsbeispiel schließt die Sonnenwelle bevorzugt im axialen Bereich/Abschnitt der Erstreckung des Planetenträgers mit einem freien Ende ab, insbesondere zumindest annähernd in einem axialen Längsabschnitt entsprechend dem stirnseitigen Ende bzw. der Stirnseite der jeweiligen Planeten oder maximal bei einer 10- oder 20-prozentigen Überlänge in Bezug auf die axiale Erstreckung der Planeten. Dies ermöglicht nicht zuletzt auch eine besonders schlanke Konstruktion des gesamten Getriebes und der hier beschriebenen Einzelkomponenten.

Gemäß einem Ausführungsbeispiel ist eine/die Lagerkomponente der Sonnenwelle in einem Längsabschnitt der Sonnenwelle axial angrenzend an einen/den in die Planeten eingreifenden Verzahnungsabschnitt der Sonnenwelle angeordnet. Eine axial derart unmittelbar angrenzende Abstützung ermöglicht auch eine Minimierung von Lagetoleranzen und Biegemomenten.

Für die Sonnenwelle haben sich insbesondere die folgenden Lagerungsarten als vorteilhaft erwiesen: angestellte Kegelrollenlagerung in O-Anordnung; angestellte Schrägkugellagerung in O-Anordnung; Für den Planetenträger wird für viele Anwendungen eine Lagerung in Kegelrollenlagern als bevorzugt erachtet.

Dabei wird der Lagerabstand für die Lagerung bevorzugt derart gewählt, dass die Lagerung einerseits steif genug ist, Kräfte aus getriebeseitigen Unstimmigkeiten bzw. Toleranzen oder sonstigen ungeplanten Abweichungen aufzunehmen (insbesondere Unwuchtkräfte, Kupplungskräfte, oder dergleichen), und andererseits weich genug ist, dass die Sonne lastabhängig zwischen den Eingriffen mit den Planeten verschiebbar gelagert ist; auf diese Weise können Zwangskräfte oder dergleichen Materialspannungen vermieden werden. Der Fachmann kann insbesondere anhand von anwendungsspezifischen Betriebsparametern eine entsprechende Auslegung bzw. Dimensionierung der Lager vornehmen.

An der Sonnenwellenlagerung kann ferner eine radiale Verdrehsicherung vorgesehen sein.

Im Zusammenhang mit der Lagerung der Sonnenwelle drehen sich sowohl Innen- als auch Außenringe; wahlweise können berührungslos messende Temperatursensoren zur Überwachung der Lagertemperatur vorgesehen sein.

Gemäß einem Ausführungsbeispiel ist die Sonnenwelle in einem axialen Längenabschnitt im/am Planetenträger gelagert, in welchem der Planetenträger im Planetengetriebegehäuse gelagert ist (Lager-in-Lager-Anordnung mit dem Planetenträger als beidseitige innen und außen abstützende Lagerstütze, insbesondere mit Planetenträgerlagerkragen). Hierdurch kann auch die Kompaktheit weiter optimiert und der Kraftfluss möglichst streng radial ausgerichtet werden, insbesondere auch zwecks Minimierung von Verwindungen oder dergleichen Lageabweichungen im Gehäuse bei Betriebszuständen unter hohen Belastungen.

Gemäß einem Ausführungsbeispiel baut die Sonnenwelle in bestimmungsgemäßer Einbaulage im Planetenträger kürzer (am entsprechenden freien Ende) als die Axialerstreckung des Planetenträgers. Dies begünstigt nicht zuletzt auch hohe konstruktive Freiheitsgrade, was die Ausgestaltung des Planetenträgers betrifft. Die Sonnenwelle kann praktisch an der axialen Endposition der Planeten zusammen mit den Planeten enden.

Gemäß einem Ausführungsbeispiel ist die Sonnenwelle am freien im Planetenträger angeordneten Ende angrenzend an den Verzahnungsabschnitt frei hängend ausgeführt. Auch dies begünstigt ein Ausrichten der Welle zusammen mit den Planeten oder dem Planetenträger, in der Art einer automatischen spannungsarmen Lagekompensation in Verbindung mit der Lagerung am/im Planetenträger.

Wahlweise kann das freie Ende der Sonnenwelle auch mit einem Zapfen und einem Lager (insbesondere Axiallager) ausgeführt sein; dies begünstigt eine in einzelnen Anwendungsfällen möglicherweise bevorzugte möglichst exakte Einbaulage und Ausrichtung der Sonnenwelle, in optimierter Abstimmung mit den weiteren Komponenten des Getriebes. Der Fachmann kann je nach Art des Getriebes bzw. Triebstrangs entscheiden, welche dieser Varianten zu bevorzugen ist. Die vorliegende Erfindung bietet dafür den nötigen konstruktiven Freiraum bzw. die entsprechenden Variationsmöglichkeiten, insbesondere ohne dass das Lagerdesign aufwändig angepasst werden muss.

Gemäß einem Ausführungsbeispiel ist die Sonnenwelle eine Eingangswelle oder eine Ausgangswelle eines Getriebes oder Triebstrangs, in welchem die Planetengetriebeanordnung verbaut oder verbaubar ist, insbesondere eine Eingangswelle oder eine Ausgangswelle eines Industriegetriebes beispielsweise für Windenergieanlagen oder bei Bergbauanlagen oder für einen Mühlenantrieb. Dies begünstigt nicht zuletzt auch eine möglichst belastungsarme Betriebsweise insbesondere bei stark dynamisch arbeitenden Rotoren oder bei dynamischen Rührwerken oder dergleichen.

Gemäß einem Ausführungsbeispiel ist die Sonnenwelle derart gelagert, dass das Drehzahlverhältnis von Wellendrehzahl zu Planetenträgerdrehzahl eine entsprechend reduzierte absolute Drehzahl der Lagerkomponente der Sonnenwelle bewirkt. Dies begünstigt nicht zuletzt auch eine vergleichsweise schlanke Konstruktion/Auslegung der einzelnen Komponenten.

Eine Verhältniszahl für die Drehzahldifferenz ist anwendungsspezifisch abhängig von der jeweiligen Getriebeübersetzung. Beispielsweise liegt sie zwischen 15% und 20%, wodurch auch eine beträchtliche Erhöhung der Lebensdauer für die Lager der Welle sichergestellt werden kann (insbesondere in zumindest annähernd vergleichbarem Verhältnis, insbesondere wenn die Drehzahl als linearer Faktor bei der Lebensdauerberechnung berücksichtigt wird).

Ein Aspekt der Erfindung betrifft ferner ein Getriebe mit wenigstens einer Planetenstufe, insbesondere ein Industriegetriebe, beispielsweise in einem Triebstrang einer Windenergieanlage oder in Bergbauanlagen oder in (Vertikal-)Mühlen.

Die zuvor genannte Aufgabe wird insofern auch gelöst durch ein Getriebe, insbesondere Industriegetriebe, insbesondere anordenbar oder verbaut in einem Triebstrang einer Windenergieanlage oder einer Generatoranordnung oder in einer Bergbauanlage oder in einem Mühlentriebstrang, mit einer zuvor weiter oben beschriebenen Planetengetriebeanordnung, insbesondere mit der Planetengetriebeanordnung in einer Anordnung zwischen einem an eine Eingangswelle gekuppelten Motor oder Rotor und einem an die Getriebeausgangsseite, insbesondere an die Sonnenwelle gekuppelten Generator. Beispielsweise in einer Windenergie-Anwendung kann z.B. ein Flansch des Planetenträgers mit dem Rotor gekoppelt sein und die Sonnenwelle kann z.B. direkt mit dem Generator verbunden sein.

Das Getriebe kann dabei auch als mehrstufiges Getriebe mit wenigstens zwei Getriebestufen ausgestaltet sein, wobei eine/die Sonnwelle der jeweiligen Getriebestufe am/im Planetenträger der jeweiligen Getriebestufe gelagert ist. Insofern ist das erfindungsgemäße Lagerungskonzept auch skalierbar bzw. auf eine gewünschte Anzahl von Getriebestufen (z.B. drei Getriebestufen) redundant übertragbar.

Die zuvor genannte Aufgabe wird insofern auch gelöst durch eine Windenergieanlage oder eine Bergbauanlage oder eine Mühle jeweils mit einem zuvor weiter oben beschriebenen Getriebe. Hierdurch ergeben sich zuvor genannte Vorteile, insbesondere in Hinblick auf eine vergleichsweise schlanke Konstruktion auch in dynamisch hochbelasteten Triebsträngen.

Ein Aspekt der Erfindung betrifft ferner eine möglichst vorteilhafte Art und Weise zum Lagern und Abstützen einer Sonnenwelle in einem vergleichsweise stark beanspruchten Triebstrang. Die zuvor genannte Aufgabe wird insofern auch gelöst durch ein Verfahren zum Lagern einer Sonnenwelle in einer Planetengetriebeanordnung mittels wenigstens einer Lagerkomponente, insbesondere in einer zuvor weiter oben beschriebenen Planetengetriebeanordnung, wobei die wenigstens eine Lagerkomponente die Sonnenwelle ausschließlich im/am Planetenträger der Planetengetriebeanordnung ohne direkte Abstützung am Gehäuse der Planetengetriebeanordnung lagert, wobei die Rotationsbewegung der wenigstens einen Lagerkomponente der Sonnenwelle derart an die Rotationsbewegung einer/der Lagerkomponente des Planetenträgers gekoppelt ist/wird, dass die absolute Drehzahl der wenigstens einen Lagerkomponente der Sonnenwelle verhältnismäßig entsprechend der Rotationsbewegung des Planetenträgers reduziert ist. Dies ermöglicht basierend auf den zuvor genannten Vorteilen auch eine sehr nachhaltige Art und Weise der Lagerung in einem sehr kompakten und leistungsfähigen Triebstrang.

Die zuvor genannte Aufgabe wird auch gelöst durch Verwendung einer innerhalb eines Planetenträgers in einem vom Planetenträger umgrenzten Längsabschnitt und innen im/am Planetenträger gelagerten Sonnenwelle zum Bereitstellen einer Planetengetriebeanordnung, insbesondere einer zuvor weiter oben beschriebenen Planetengetriebeanordnung, für ein Getriebe mit optimiertem Lagerdrehzahlverhältnis (minimierter Lagerdrehzahldifferenz) zwischen Welle/Wellendrehzahl und Planetenträger/Planetenträgerdrehzahl und mit minimierter Baulänge, insbesondere für ein Industriegetriebe oder einen Triebstrang einer Windenergieanlage. Hierdurch lassen sich zuvor genannte Vorteile realisieren, insbesondere auch in Hinblick auf im gesamten Triebstrang möglichst stark minimierte dynamische Belastungen und Momente.

### KURZE BESCHREIBUNG DER FIGUREN

In den nachfolgenden Zeichnungsfiguren wird die Erfindung noch näher anhand bevorzugter Ausführungsbeispiele exemplarisch beschrieben, wobei die nachfolgend dargestellten Merkmale sowohl jeweils einzeln als auch in Kombination einen Aspekt der Erfindung darstellen können, und wobei für Bezugszeichen, die nicht explizit in einer jeweiligen Zeichnungsfigur beschrieben werden, auf die anderen Zeichnungsfiguren verwiesen wird. Es zeigen:
**Figur 1** in einer geschnittenen Seitenansicht in schematischer Darstellung ein herkömmliches Planetengetriebe (verbaut) gemäß dem Stand der Technik;
**Figuren 2A****,** **2B** in zwei unterschiedlich geschnittenen Seitenansichten jeweils eine Planetengetriebeanordnung gemäß einem Ausführungsbeispiel;
**Figur 3** in einer perspektivischen Detailansicht eine Planetengetriebeanordnung gemäß einem Ausführungsbeispiel;
**Figuren 4A**, **4B, 4C** in einer perspektivischen Seitenansicht und in einer geschnittenen Seitenansicht in horizontaler Ausrichtung und in einer perspektivischen Detailansicht eine Planetengetriebeanordnung und einzelne Komponenten davon (insbesondere die Sonnenwelle) gemäß einem Ausführungsbeispiel;

### DETAILLIERTE BESCHREIBUNG DER FIGUREN

Die Erfindung wird zunächst unter allgemeiner Bezugnahme auf alle Bezugsziffern und Figuren erläutert. Besonderheiten oder Einzelaspekte oder in der jeweiligen Figur gut sichtbare/darstellbare Aspekte der vorliegenden Erfindung werden individuell im Zusammenhang mit der jeweiligen Figur thematisiert.

Ein herkömmliches Planetengetriebe 1 (verbaut) mit einer herkömmlichen Lagerung 2 für die Welle 3 (insbesondere mit Steckverzahnung zur Sonne), abgestützt am Gehäuse 5 des Planetengetriebes bzw. an damit verbundener Komponente (insbesondere Planetenradaufnahme bzw. entsprechende Innenverzahnung) erfordert eine vergleichsweise große Baulänge. Durch die Lagerung an zwei axial vergleichsweise weit auseinanderliegenden Lagerpunkten des Lagers 2 ergibt sich auch ein vergleichsweise großer Stützhebel, der kraftfluss- bzw. momententechnisch am Gehäuse abgestützt werden muss, beispielsweise indem einzelne Gehäusekomponenten miteinander verschraubt und mit der Planetenradaufnahme 6 verbunden werden. Auch der Planetenträger 7, in welchem die Planeten 9 umlaufen, ist über ein oder mehrere Lager 8 an wenigstens einer dieser Gehäusekomponenten abgestützt.

Im Unterschied dazu liefert die vorliegende Erfindung eine Planetengetriebeanordnung 10 mit einer Sonnenwelle 13, welche direkt (und bevorzugt ausschließlich) im/am Planetenträger 17 gelagert ist, beispielsweise in einem Industriegetriebe 20, beispielsweise in einem Triebstrang einer Windenergieanlage oder einer Bergbauanlage oder einer Mühle. Wenigstens eine Lagerkomponente 13.1 an der Sonnenwelle ist in wenigstens einer Lagerkomponente 17.1 im/am Planetenträger abgestützt, insbesondere in einem Axialabschnitt des Planetenträgers, der wie eine Art Planetenträgerlagerkragen 17.3 ausgestaltet ist. Beispielsweise weist die Sonnenwelle 13 ein getriebeseitiges Ende 13.5 auf (insbesondere entsprechend einer freien Überlänge x1 bzw. einem ersten Abschnitt), an welches eine Verzahnung 13.3 angrenzt, welche in einem Verzahnungsabschnitt bzw. Eingriffsabschnitt x2 (zweiter Abschnitt) an der Welle vorgesehen ist, an welchen ein Lagerungsabschnitt x3 (dritter Abschnitt für die hier beschriebene wenigstens eine Lagerkomponente 13.1) und daraufhin ein Verbindungsabschnitt x4 angrenzen (vierter Abschnitt, z.B. Welle-Nabe-Verbindung mittels Feder, z.B. Kupplungszapfen mit Passfederverbindung). Am Übergang zwischen dem dritten und vierten Abschnitt kann eine Abdichtung gegen eine Gehäusedurchführung 5.1 erfolgen.

Das getriebeseitige Ende 13.5 kann wahlweise mit einem Zapfen und einem Lager (insbesondere Axiallager) oder ohne Zapfen und Lager (also frei hängend) ausgeführt sein.

Die erfindungsgemäße Lagerung und Abstützung ermöglicht auch eine gute Symbiose bezüglich Kompaktheit und nachhaltiger und robuster Integration der Wellenabstützung in den Gesamtaufbau des Getriebes. Lange Hebelarme werden vermieden, und die Lagerung kann insbesondere auch vergleichsweise toleranzarm und spannungsminimiert ausgeführt sein.

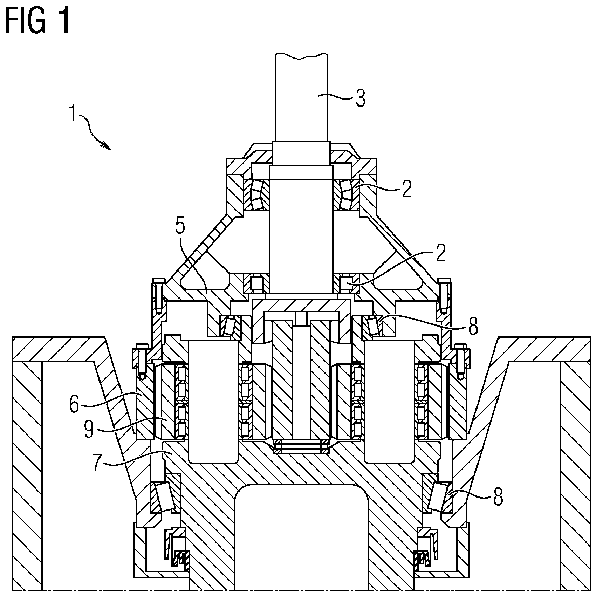

In der **Fig. 1** ist ein herkömmlicher Aufbau mit Abstützung der Welle im Getriebegehäuse gezeigt (hier: Stützlagerung in X-Anordnung insbesondere mit angestellten Kegelrollenlagern, sowie in einer zweiten Lagerstelle ein axial separat davon angeordnetes Rollenlager). Bei dem in Fig. 1 gezeigten Aufbau ist eine Motorlaterne nicht dargestellt. Der Planetenträger geht in die Form einer Hohlwelle über. Auf Höhe der Planetenradaufnahme ist ein Getriebeflansch für eine/die jeweils anwendungsspezifisch gewünschter Aufhängung des Getriebes in einem Maschinenrahmen oder dergleichen Abstützung angeordnet. Bei dem in Fig. 1 gezeigten Aufbau ist die Welle vergleichsweise lang und besteht aus zwei Teilen (Steckverzahnung mit Sonne). Es wird vergleichsweise viel Bauraum benötigt. Die Herstellung der einzelnen Komponenten ist eher aufwendig, insbesondere was Welle und Sonne betrifft.

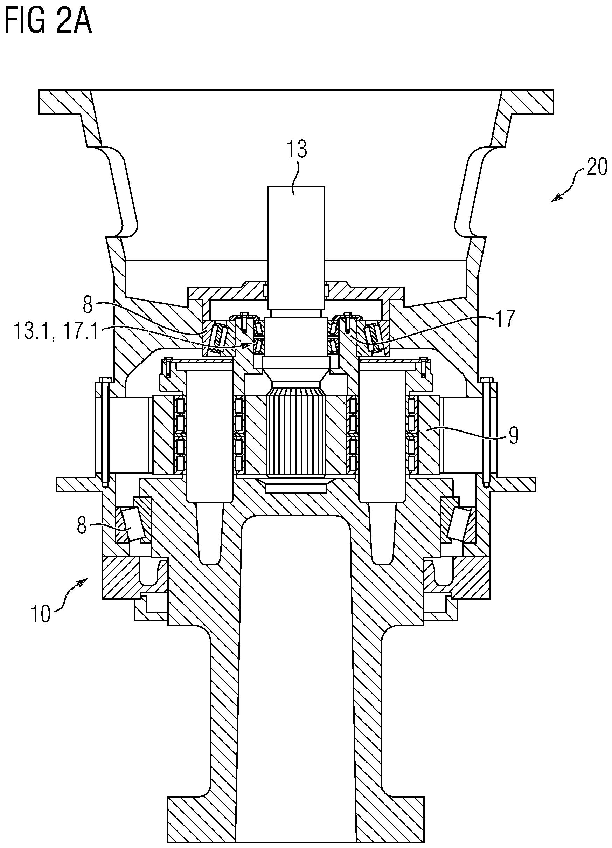

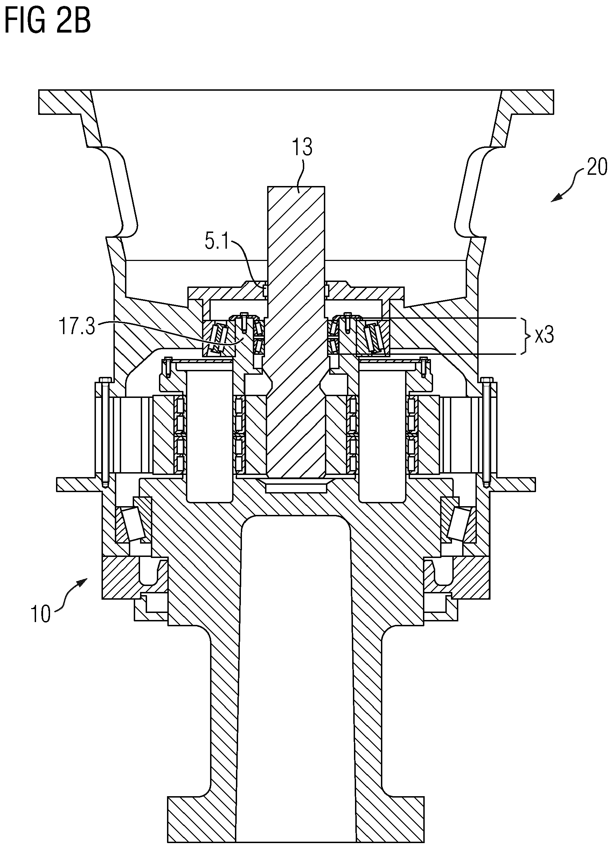

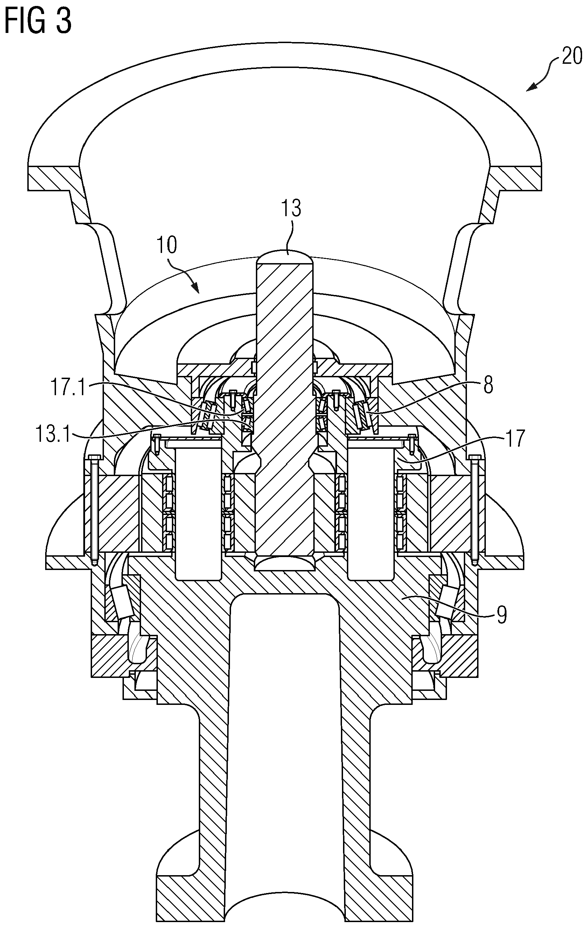

In **Fig. 2A****,** **2B** ist ein Ausführungsbeispiel der Erfindung in sich inhaltlich ergänzenden Schnittansichten gezeigt. Die Abstützung und Lagerung der Sonnenwelle kann in einem Axialabschnitt nahe einer/der Gehäusedurchführung 5.1 erfolgen, insbesondere in demselben Axialabschnitt, in welchem auch eine Abstützung/Lagerung des Planetenträgers am Gehäuse erfolgt. In **Fig. 3** ist eine perspektivische Detailansicht gezeigt, aus welcher die erfindungsgemäße relative Anordnung der einzelnen Lagerkomponenten noch deutlicher hervorgeht. Das Lager der Sonnenwelle ist dabei auch hinsichtlich Schmierung vergleichsweise vorteilhaft angeordnet (gute Zugänglichkeit).

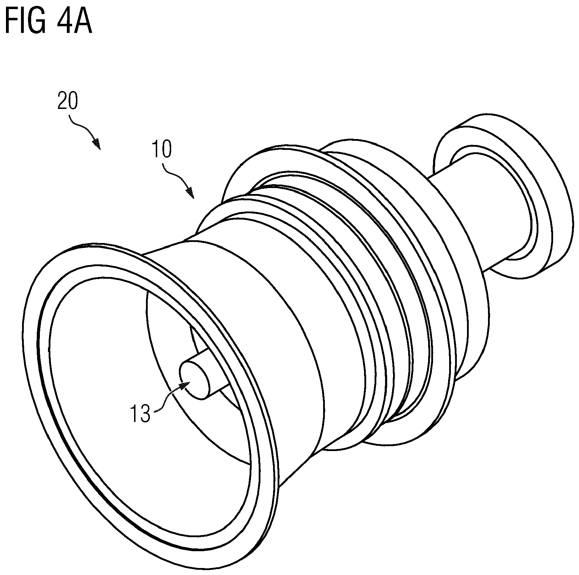

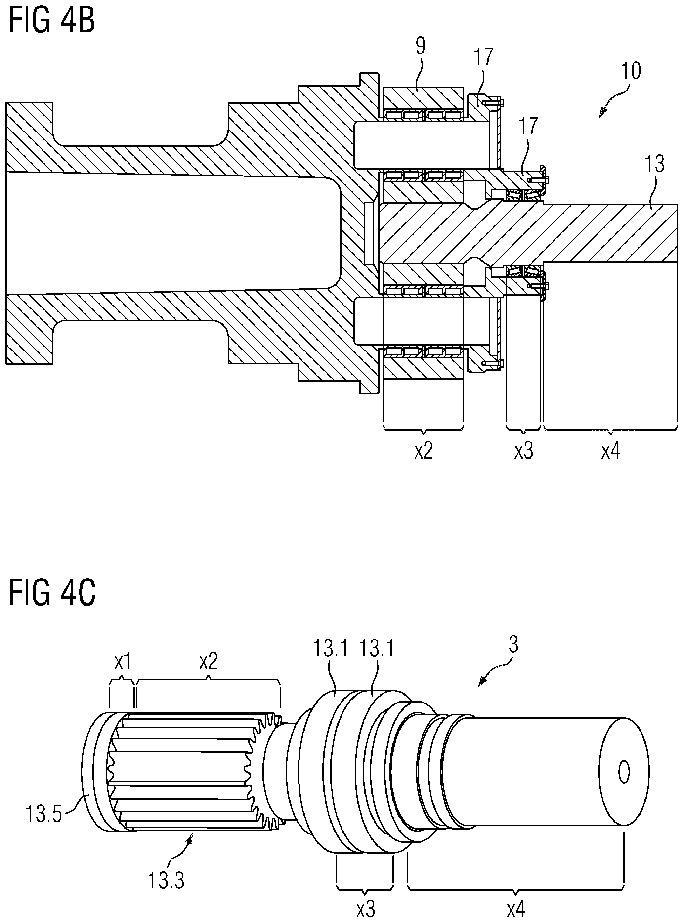

In **Fig. 4A****,** **4B, 4C** ist mehr oder weniger horizontale Ausrichtung der Sonnenwelle gezeigt, wobei diejenige Gehäusekomponente, in welcher der Planetenträger abgestützt ist, in Fig. 4B nicht dargestellt ist (auch nicht das entsprechende Lager). Aus Fig. 4B ist erkennbar, dass der vom Planetenträger überlappte axiale Abschnitt der Sonnenwelle (bzw. der im Planetenträger angeordnete Abschnitt der Sonnenwelle) sogar länger ist als der axial hervorstehende (vierte) Abschnitt; auch dies veranschaulicht die vorteilhaft kurze Baulänge der erfindungsgemäßen Anordnung.

Aus Fig. 4C geht auch hervor, dass die absolute Länge der Sonnenwelle 13 vergleichsweise kurz sein kann, beispielsweise nur Faktor 2 bis 2,5 oder 3 der Länge des Verzahnungsabschnitts x2 beträgt; insofern ist die absolute Länge der Sonnenwelle 13 im Wesentlichen definiert durch die konstruktiv bzw. aufgrund der zu übertragenden Drehmomente erforderlichen axialen Länge der beiden drehmomentübertragenden Abschnitte x2, x4 und des unmittelbar angrenzenden und dazwischenliegenden (mehr oder weniger breiten) Lagerungsabschnitts x3. Dies begünstigt nicht zuletzt auch eine möglichst spannungsarme Lagerung der Welle, wobei der Lagerungsabschnitt x3 vorteilhaft mittig und vorteilhaft axial nah am jeweiligen drehmomentübertragenden Abschnitt angeordnet ist.

### Bezugszeichenliste

- 1: herkömmliches Planetengetriebe (verbaut)
- 2: herkömmliche Lagerung für Welle, abgestützt am Gehäuse bzw. an damit verbundener Komponente (insbesondere Planetenradaufnahme)
- 3: herkömmliche Welle, insbesondere mit Steckverzahnung zur Sonne
- 5: Planetengetriebegehäuse
- 5.1: Gehäusedurchführung
- 6: Planetenradaufnahme (insbesondere Hohlrad) mit Innenverzahnung
- 7: herkömmlicher Planetenträger
- 8: Lagerung Planetenträger im Gehäuse
- 9: Planet(en) bzw. Planetenrad
- 10: Planetengetriebeanordnung
- 13: Sonnenwelle
- 13.1: Lagerkomponente an Sonnenwelle
- 13.3: Verzahnung Sonne
- 13.5: getriebeseitiges Ende
- 17: Planetenträger
- 17.1: Lagerkomponente an Planetenträger für die Sonnenwelle
- 17.3: Planetenträgerlagerkragen
- 20: Industriegetriebe
- x1: freie Überlänge (erster Abschnitt)
- x2: Verzahnungsabschnitt / Eingriffsabschnitt (zweiter Abschnitt)
- x3: Lagerungsabschnitt (dritter Abschnitt) bzw. eine einzige Lagerstelle
- x4: drehfester Verbindungsabschnitt (vierter Abschnitt)

## Patentansprüche

1. Planetengetriebeanordnung (10) insbesondere für Industriegetriebe, mit einer Sonnenwelle (13) und einem Planetenträger (17) und damit in einer Planetenradaufnahme (6) geführten Planeten (9), in welche die Sonnenwelle (13) eingreift, wobei die Sonnenwelle (13) im/am Planetenträger (17) gelagert ist.

2. Planetengetriebeanordnung (10) nach Anspruch 1 **dadurch gekennzeichnet, dass** der Planetenträger (17) wenigstens eine Lagerkomponente (17.1) zur Lagerung der Sonnenwelle (13) aufweist, insbesondere motorseitig oder axial außenliegend im Randbereich des Planetenträgers (17); und/oder wobei die Sonnenwelle (13) wenigstens eine Lagerkomponente (13.1) zur Lagerung im/am Planetenträger aufweist.

3. Planetengetriebeanordnung (10) nach Anspruch 1 oder 2 **dadurch gekennzeichnet, dass** die Planetengetriebeanordnung (10) in einem Planetengetriebegehäuse (5) angeordnet oder anordenbar ist, wobei die Sonnenwelle (13) unabhängig vom Planetengetriebegehäuse (5) gelagert ist, insbesondere ausschließlich im/am Planetenträger (17).

4. Planetengetriebeanordnung (10) nach einem der Ansprüche 1 bis 3 **dadurch gekennzeichnet, dass** sich die Sonnenwelle (3) zumindest über einen Abschnitt von einer Gehäusedurchführung (5.1) über eine einzige Lagerstelle (x3) im/am Planetenträger (17) bis in den Verzahnungsabschnitt der Planeten erstreckt, insbesondere bei einstückiger integraler Ausgestaltung der Sonnenwelle, wobei die Sonnenwelle (13) bevorzugt im axialen Bereich/Abschnitt des Planetenträgers (17) mit einem freien Ende abschließt, insbesondere zumindest annähernd in einem axialen Längsabschnitt entsprechend der Stirnseite der jeweiligen Planeten (9) oder maximal bei einer 10- oder 20-prozentigen Überlänge in Bezug auf die axiale Erstreckung der Planeten.

5. Planetengetriebeanordnung (10) nach einem der vorhergehenden Ansprüche **dadurch gekennzeichnet, dass** eine/die Lagerkomponente (13.1) der Sonnenwelle (13) in einem Längsabschnitt der Sonnenwelle (13) axial angrenzend an einen/den in die Planeten eingreifenden Verzahnungsabschnitt (x2) der Sonnenwelle (13) angeordnet ist.

6. Planetengetriebeanordnung (10) nach einem der vorhergehenden Ansprüche **dadurch gekennzeichnet, dass** die Sonnenwelle (13) in einem axialen Längenabschnitt im/am Planetenträger (17) gelagert ist, in welchem der Planetenträger (17) an einem/am/im Planetengetriebegehäuse (5) gelagert ist, insbesondere in einem von einem Planetenträgerlagerkragen (17.3) überragten Längenabschnitt.

7. Planetengetriebeanordnung (10) nach einem der vorhergehenden Ansprüche **dadurch gekennzeichnet, dass** die Sonnenwelle (13) in bestimmungsgemäßer Einbaulage im Planetenträger (17) kürzer baut als die Axialerstreckung des Planetenträgers.

8. Planetengetriebeanordnung (10) nach einem der vorhergehenden Ansprüche **dadurch gekennzeichnet, dass** die Sonnenwelle (13) eine Eingangswelle oder eine Ausgangswelle eines Getriebes oder Triebstrangs ist, in welchem die Planetengetriebeanordnung (10) verbaut oder verbaubar ist, insbesondere eine Eingangswelle oder eine Ausgangswelle eines Industriegetriebes.

9. Planetengetriebeanordnung (10) nach einem der vorhergehenden Ansprüche **dadurch gekennzeichnet, dass** die Sonnenwelle (13) derart gelagert ist, dass das Drehzahlverhältnis von Wellendrehzahl zu Planetenträgerdrehzahl eine entsprechend reduzierte absolute Drehzahl der Lagerkomponente (13.1) der Sonnenwelle (13) bewirkt.

10. Getriebe, insbesondere Industriegetriebe (20), insbesondere anordenbar oder verbaut in einem Triebstrang einer Windenergieanlage oder einer Generatoranordnung oder in einer Bergbauanlage oder in einem Mühlentriebstrang, mit einer Planetengetriebeanordnung (10) nach einem der vorhergehenden Ansprüche, insbesondere mit der Planetengetriebeanordnung in einer Anordnung zwischen einem an eine Eingangswelle gekuppelten Motor oder Rotor und einem an die Getriebeausgangsseite, insbesondere an die Sonnenwelle gekuppelten Generator.

11. Getriebe nach dem vorhergehenden Anspruch, wobei das Getriebe als mehrstufiges Getriebe mit wenigstens zwei Getriebestufen ausgestaltet ist, wobei eine/die Sonnwelle der jeweiligen Getriebestufe am/im Planetenträger der jeweiligen Getriebestufe gelagert ist.

12. Windenergieanlage oder Bergbauanlage oder Mühle jeweils mit einem Getriebe (20) nach einem der beiden vorhergehenden Ansprüche.

13. Verfahren zum Lagern einer Sonnenwelle (13) in einer Planetengetriebeanordnung (10) mittels wenigstens einer Lagerkomponente (13.1, 17.1), wobei die wenigstens eine Lagerkomponente (13.1) die Sonnenwelle (13) ausschließlich im/am Planetenträger (17) der Planetengetriebeanordnung (10) ohne direkte Abstützung am Gehäuse (5) der Planetengetriebeanordnung lagert, wobei die Rotationsbewegung der wenigstens einen Lagerkomponente (13.1) der Sonnenwelle derart an die Rotationsbewegung einer/der Lagerkomponente (17.1) des Planetenträgers (17) gekoppelt ist/wird, dass die absolute Drehzahl der wenigstens einen Lagerkomponente (13.1) der Sonnenwelle verhältnismäßig entsprechend der Rotationsbewegung des Planetenträgers (17) reduziert ist.

14. Verwendung einer innerhalb eines Planetenträgers (17) in einem vom Planetenträger umgrenzten Längsabschnitt und innen im/am Planetenträger gelagerten Sonnenwelle (13) zum Bereitstellen einer Planetengetriebeanordnung (10), insbesondere einer Planetengetriebeanordnung (10) nach einem der Ansprüche 1 bis 9, für ein Getriebe (20) mit optimiertem Lagerdrehzahlverhältnis zwischen Welle/Wellendrehzahl und Planetenträger/Planetenträgerdrehzahl und mit minimierter Baulänge, insbesondere für ein Industriegetriebe oder für einen Triebstrang einer Windenergieanlage oder einer Bergbauanlage oder einer Mühle.
